(19) Europäisches Patentamt
European Patent Office
Office européen des brevets

(11) **EP 4 697 716 A1**

(12) **EUROPEAN PATENT APPLICATION**
published in accordance with Art. 153(4) EPC

(43) Date of publication:
**18.02.2026 Bulletin 2026/08**

(21) Application number: 24853707.8

(22) Date of filing: **09.08.2024**

(51) International Patent Classification (IPC):
*H04N 19/30* (2014.01)

(52) Cooperative Patent Classification (CPC):
**H04N 19/186; H04N 19/30; H04N 19/44;
H04N 19/70**

(86) International application number:
**PCT/CN2024/111111**

(87) International publication number:
**WO 2025/036298 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 15.08.2023  CN 202311037386
06.08.2024  CN 202411074857

(71) Applicant: **Huawei Technologies Co., Ltd.
Shenzhen, Guangdong 518129 (CN)**

(72) Inventors:
• **WANG, Yichuan
Shenzhen, Guangdong 518129 (CN)**
• **XU, Weiwei
Shenzhen, Guangdong 518129 (CN)**
• **YU, Quanhe
Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **IMAGE PROCESSING METHOD AND RELATED DEVICE**

(57)     This application provides an image processing method and a related device. The method includes: obtaining first base-layer data, first enhancement-layer data, and first metadata, where the first base-layer data is base-layer data corresponding to a first HDR image, and the first enhancement-layer data is enhancement-layer data corresponding to the first HDR image; performing conversion on target data according to the first metadata, to obtain target conversion data, where the target data is the first base-layer data and/or the first enhancement-layer data; and determining a second HDR image based on the target conversion data. Based on the foregoing technical solution, a more efficient and proper encoding scheme can be selected for the base-layer data and/or the enhancement-layer data, and then the base-layer data and/or the enhancement-layer data may be converted during decoding, so that the finally synthesized HDR image has a higher restoration degree and is more adaptive to a display device.

[FIG. 12]

# EP 4 697 716 A1

## Description

This application claims priorities to Chinese Patent Application No. 202311037386.9, filed with the China National Intellectual Property Administration on August 15, 2023, and entitled "CODING METHOD AND RELATED DEVICE", and to Chinese Patent Application No. 202411074857.8, filed with the China National Intellectual Property Administration on August 6, 2024, and entitled "IMAGE PROCESSING METHOD AND RELATED DEVICE", both of which are incorporated herein by reference in their entireties.

## TECHNICAL FIELD

This application relates to the encoding and decoding field, and more specifically, to an image processing method and a related device.

## BACKGROUND

A dynamic range (dynamic range) indicates a ratio of a maximum value to a minimum value of a variable in many fields. For a digital image, the dynamic range is a ratio of a maximum grayscale value to a minimum grayscale value in a range in which the image can be displayed. The dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001=10^{13}$. However, the luminance of the sun and the luminance of the star are not obtained at the same time in a real scene in nature. For a natural scene in the real world, a dynamic range is from $10^{-3}$ to $10^6$. Currently, in most color digital images, each of red (red, R), green (green, G), and blue (blue, B) channels uses an 8-bit byte for storage. In other words, a representation range of each channel is a grayscale level of 0 to 255. 0 to 255 herein is a dynamic range of an image. In the real world, a dynamic range in a same scenario is from $10^{-3}$ to $10^6$, which may be referred to as a high dynamic range (high dynamic range, HDR). Correspondingly, a dynamic range of a common picture or video is a low dynamic range (low dynamic range, LDR).

An HDR image or an HDR video may need to be transcoded in a delivery or transmission process. In a current HDR transcoding scheme, the HDR image or the HDR video is directly transcoded. After the HDR image or the HDR video is decoded, HDR pixel values and an HDR format identifier and information are obtained. The HDR pixel values usually need to be processed (for example, processing such as image upsampling and downsampling and enhancement). The HDR format identifier and information, and processed HDR pixel values are then sent to an encoder for re-encoding. A re-encoded HDR image or HDR video is delivered to another device. This scheme (which may be referred to as a "single-layer transcoding scheme") in which an HDR image or an HDR video is directly transcoded may cause an exception in a transcoded HDR image or HDR video, affecting user experience.

Therefore, how to provide a more effective encoding/decoding scheme is an urgent problem to be resolved in this field.

## SUMMARY

This application provides an image processing method and a related device, to facilitate more efficient and proper encoding.

According to a first aspect, an embodiment of this application provides an image processing method, including: obtaining first base-layer data, first enhancement-layer data, and first metadata, where the first base-layer data is base-layer data corresponding to a first HDR image, and the first enhancement-layer data is enhancement-layer data corresponding to the first HDR image; performing conversion on target data according to the first metadata, to obtain target conversion data, where the target data is the first base-layer data and/or the first enhancement-layer data; and determining a second HDR image based on the target conversion data.

Based on the foregoing technical solution, when a dual-layer image of the HDR image is processed, the base-layer data and/or the enhancement-layer data may be first converted based on the metadata, so that the finally synthesized HDR image has a higher restoration degree and is more adaptive to a display device.

With reference to the first aspect, in a possible implementation of the first aspect, performing conversion on the target data according to the first metadata includes: determining, based on the first metadata, to convert the target data, and then converting the target data to obtain the target conversion data.

Based on the foregoing technical solution, when the dual-layer image of the HDR image is processed, it may be first determined, based on the metadata, to convert the base-layer data and/or the enhancement-layer data, and then the base-layer data and/or the enhancement-layer data may be converted based on a determining result, so that the finally synthesized HDR image has a higher restoration degree and is more adaptive to the display device.

With reference to the first aspect, in a possible implementation of the first aspect, the first metadata includes conversion location information, and the conversion location information indicates a location at which the conversion occurs; and performing conversion on the target data according to the first metadata includes: performing conversion on the target data according to the conversion location information.

The metadata indicates the conversion location, improving flexibility of processing the target data.

With reference to the first aspect, in a possible implementation of the first aspect, the first metadata includes first conversion determination information, and the first indication information indicates that the target data needs to be converted; and performing conversion on the target data according to the first metadata includes: performing conversion on the target data according to the first conversion determination information.

With reference to the first aspect, in a possible implementation of the first aspect, the conversion includes one or more of the following: color space conversion, color gamut conversion, or color compensation.

With reference to the first aspect, in a possible implementation of the first aspect, when the target data is the first base-layer data and the conversion includes the color space conversion, converting the target data to obtain the target conversion data includes: performing the color space conversion on the first base-layer data to obtain the target conversion data, where color space of the target conversion data is RGB color space.

With reference to the first aspect, in a possible implementation of the first aspect, when the target data is the first base-layer data and the conversion includes the color gamut conversion, converting the target data to obtain the target conversion data includes: performing the color gamut conversion on the first base-layer data by using T( ), to obtain the target conversion data, where T( ) is a default matrix or a conversion matrix indicated by the first metadata.

With reference to the first aspect, in a possible implementation of the first aspect, when the target data includes the first enhancement-layer data, the conversion further includes channel conversion, and the channel conversion is used to restore a channel of the first enhancement-layer data to an original channel.

With reference to the first aspect, in a possible implementation of the first aspect, the first metadata further includes conversion parameters used when the conversion is performed.

With reference to the first aspect, in a possible implementation of the first aspect, when the conversion includes the color compensation, the conversion parameters include: a color compensation matrix; a transfer function; or a compensation value and a compensation method.

With reference to the first aspect, in a possible implementation of the first aspect, the method further includes: performing the color gamut conversion and/or the color compensation on the second HDR image.

According to a second aspect, an embodiment of this application provides an image processing method. The method includes: determining, based on an obtained first HDR image, first base-layer data and first enhancement-layer data that correspond to the first HDR image, and first metadata, where the first metadata is used in conversion of target data, and the target object includes the first base-layer data and/or the first enhancement-layer data; and encoding the target data, to obtain a bitstream.

Based on the foregoing technical solution, when a dual-layer image of the HDR image is processed, the information of determining to convert the base-layer data and/or the enhancement-layer data may be transmitted by using the metadata, thereby improving encoding efficiency. A decoder side may determine, based on the metadata, to convert the base-layer data and/or the enhancement-layer data, and convert the base-layer data and/or the enhancement-layer data based on a determining result, so that the finally synthesized HDR image has a higher restoration degree and is more adaptive to the display device.

With reference to the second aspect, in a possible implementation of the second aspect, the first metadata includes conversion location information, and the conversion location information indicates a location at which the conversion occurs.

With reference to the second aspect, in a possible implementation of the second aspect, the first metadata includes first conversion determination information, and the first indication information indicates that the first base-layer data and/or the first enhancement-layer data need(s) to be converted.

With reference to the second aspect, in a possible implementation of the second aspect, the conversion includes one or more of the following: color space conversion, color gamut conversion, or color compensation.

With reference to the second aspect, in a possible implementation of the second aspect, the first metadata further includes conversion parameters used when the conversion is performed.

With reference to the second aspect, in a possible implementation of the second aspect, when the conversion includes the color gamut conversion, the conversion parameters include a conversion matrix.

With reference to the second aspect, in a possible implementation of the second aspect, when the conversion includes the color compensation, the conversion parameters include: a color compensation matrix; a transfer function; or a compensation value and a compensation method.

According to a third aspect, an embodiment of this application provides an electronic device. The electronic device includes units configured to implement any one of the first aspect or the possible implementations of the first aspect.

According to a fourth aspect, an embodiment of this application provides an electronic device. The electronic device includes units configured to implement any one of the second aspect or the possible implementations of the second aspect.

According to a fifth aspect, an embodiment of this application provides a computer device. The electronic device includes a processor. The processor is configured to: be coupled to a memory, and read and execute instructions and/or program code in the memory, to perform any one of the first aspect or the possible implementations of the first aspect.

According to a sixth aspect, an embodiment of this application provides a computer device. The electronic device includes a processor. The processor is configured to: be coupled to a memory, and read and execute instructions and/or program code in the memory, to perform any one of the second aspect or the possible implementations of the second aspect.

According to a seventh aspect, an embodiment of this application provides a system on chip. The system on chip includes a logic circuit. The logic circuit is configured to: be coupled to an input/output interface, and transmit data through the input/output interface, to perform any one of the first aspect or the possible implementations of the first aspect.

According to an eighth aspect, an embodiment of this application provides a system on chip. The system on chip includes a logic circuit. The logic circuit is configured to: be coupled to an input/output interface, and transmit data through the input/output interface, to perform any one of the second aspect or the possible implementations of the second aspect.

According to a ninth aspect, an embodiment of this application provides a computer-readable storage medium. The computer-readable storage medium stores program code. When the program code stored in the computer storage medium is run on a computer, the computer is enabled to perform any one of the first aspect or the possible implementations of the first aspect.

According to a tenth aspect, an embodiment of this application provides a computer-readable storage medium. The computer-readable storage medium stores program code. When the program code stored in the computer storage medium is run on a computer, the computer is enabled to perform any one of the second aspect or the possible implementations of the second aspect.

According to an eleventh aspect, an embodiment of this application provides a computer program product. The computer program product includes computer program code. When the computer program code is run on a computer, the computer is enabled to perform any one of the second aspect or the possible implementations of the second aspect.

According to a twelfth aspect, an embodiment of this application provides a computer program product. The computer program product includes computer program code. When the computer program code is run on a computer, the computer is enabled to perform any one of the second aspect or the possible implementations of the second aspect.

According to a thirteenth aspect, an embodiment of this application provides a bitstream, where the bitstream is determined based on any one of the second aspect or the possible implementations of the second aspect.

According to a fourteenth aspect, an embodiment of this application provides a bitstream, where the bitstream includes first base-layer data, first enhancement-layer data, and first metadata, and the first metadata is used to convert the first base-layer data and/or the first enhancement-layer data.

According to a fifteenth aspect, an embodiment of this application provides a bitstream storage apparatus. The apparatus is configured to store the bitstream in the thirteenth aspect or the fourteenth aspect.

According to a sixteenth aspect, an embodiment of this application provides a bitstream transmission apparatus. The apparatus includes a transmitter and a receiver, the receiver is configured to receive a bitstream generated based on the method in the second aspect, and the transmitter is configured to send the bitstream to a client device by using a transmission medium.

According to a seventeenth aspect, an embodiment of this application provides a bitstream transmission apparatus. The apparatus includes a transmitter and at least one storage medium, the at least one storage medium is configured to store a bitstream generated based on the method in the second aspect, and the transmitter is configured to: obtain the bitstream from the storage medium and send the bitstream to a client device by using a transmission medium.

According to an eighteenth aspect, an embodiment of this application provides a bitstream delivery system. The system includes: at least one storage medium, configured to store a bitstream generated based on the method in the second aspect; and a streaming media server, configured to: obtain a target bitstream from the at least one storage medium and send the target bitstream to a client device, where the streaming media server includes a content server or a content delivery server.

BRIEF DESCRIPTION OF DRAWINGS

FIG. 1 is a diagram of dynamic range mapping;
FIG. 2 is an image of a PQ optical-electro transfer function;
FIG. 3 is an image of an HLG optical-electro transfer function;
FIG. 4 is an image of an SLF optical-electro transfer function;
FIG. 5 is a block diagram of an encoding-decoding system to which an embodiment of this application is applied;

FIG. 6 is a block diagram of a content provider system for implementing a content delivery service to which an embodiment of this application is applied;

FIG. 7 is a schematic flowchart of working of a streaming media system to which an embodiment of this application is applicable;

FIG. 8 is an example diagram of an end-to-end process according to this application;

FIG. 9 is an example diagram of a streaming media system architecture according to this application;

FIG. 10 is a diagram of a possible system architecture to which an embodiment of this application is applicable;

FIG. 11 is a schematic flowchart of image processing according to an embodiment of this application;

FIG. 12 is a schematic flowchart of an image processing method according to an embodiment of this application;

FIG. 13 is a schematic flowchart of an image processing method according to an embodiment of this application;

FIG. 14 is a schematic flowchart of an image processing method according to an embodiment of this application;

FIG. 15 is a block diagram of a structure of an electronic device according to an embodiment of this application; and

FIG. 16 is a block diagram of a structure of an electronic device according to an embodiment of this application.

## DESCRIPTION OF EMBODIMENTS

The following describes technical solutions of this application with reference to accompanying drawings.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may represent a, b, c, a-b, a-c, b-c, or a-b-c, where a, b, and c may be singular or plural.

For ease of understanding of embodiments of this application, some concepts or terms in embodiments of this application are first explained.

A color value (color value) is a value corresponding to a particular color component (for example, R, G, B, or Y) of an image.

A digital code value (digital code value) is a digital expression value of an image signal, and the digital code value represents a nonlinear color value.

A linear color value (linear color value) is in direct proportion to light intensity, needs to be normalized to [0, 1] in an optional case, and is abbreviated as E.

A nonlinear color value (nonlinear color value) is a normalized digital expression value of image information, is in direct proportion to a digital code value, needs to be normalized to [0, 1] in an optional case, and is abbreviated as E'.

An electro-optical transfer function (electro-optical transfer function, EOTF) describes a relationship of conversion from a nonlinear color value to a linear color value.

Metadata (metadata) is data that is carried in a video signal and that describes video source information.

Dynamic metadata (dynamic metadata) is metadata associated with each frame of image, and the metadata changes with pictures.

Static metadata (static metadata) is metadata associated with an image sequence, and the metadata remains unchanged in the image sequence.

A luma signal (luma) represents a combination of nonlinear color signals, and has a symbol of Y'.

Luminance mapping (luminance mapping) is mapping from luminance of a source image to luminance of a target system.

Display adaptation (display adaptation) is to process a video signal to adapt to a display property of a target display.

A source image (source picture) is an image that is input at an HDR pre-processing stage.

A mastering display (mastering display) is a reference display used when a video signal is edited and produced, and is used to determine editing and producing effects of a video.

A linear scene light (linear scene light) signal is an HDR video signal that uses content as scene light in an HDR video technology, means scene light captured by a camera/camera sensor, and is generally a relative value. An HLG signal is obtained after hybrid log-gamma (hybrid log-gamma, HLG) encoding is performed on the linear scene light signal. The HLG signal is a scene light signal, and the HLG signal is nonlinear. The scene light signal generally needs to be converted into a display light signal through an OOTF for display on a display device.

A linear display light (linear display light) signal is an HDR video signal that uses content as display light in the HDR video technology, means display light emitted on a display device, and is generally an absolute value in a unit of nit (nit). A PQ signal is obtained after perceptual quantization (perceptual quantization, PQ) encoding is performed on the linear display light signal. The PQ signal is a display light signal and the PQ signal is a nonlinear signal. Based on a general standard, the display light signal is displayed on the display device based on absolute luminance of the display light signal.

An opto-optical transfer curve (opto-optical transfer function, OOTF) is a curve that converts one light signal into another light signal in a video technology.

A dynamic range (dynamic range) is a ratio of maximum luminance to minimum luminance of a video signal.

Luma-chroma-chroma (luma-chroma-chroma, LCC) are three components of a luma-chroma separated video signal.

An optical-electro transfer function (optical-electro transfer function, OETF) represents a relationship of conversion from a linear signal of an image pixel to a nonlinear signal. Currently, commonly used optical-electro transfer functions include the following three types:

a perceptual quantizer (perceptual quantizer, PQ) optical-electro transfer function, a hybrid log-gamma (hybrid log-gamma, HLG) optical-electro transfer function, and a scene luminance fidelity (scene luminance fidelity, SLF) optical-electro transfer function. The three optical-electro transfer functions are optical-electro transfer functions specified in the audio video coding standard (audio video coding standard, AVS).

The dynamic range (dynamic range) indicates a ratio of a maximum value to a minimum value of a variable in many fields. For a digital image, the dynamic range is a ratio of a maximum grayscale value to a minimum grayscale value in a range in which the image can be displayed. The dynamic range in nature is quite large. A night scene under the starry sky has a luminance of approximately 0.001 cd/m$^2$. The sun has a luminance up to 1000000000 cd/m$^2$. Such a dynamic range achieves an order of magnitude of $1000000000/0.001=10^{13}$. However, the luminance of the sun and the luminance of the star are not obtained at the same time in a real scene in nature. For a natural scene in the real world, a dynamic range is from $10^{-3}$ to $10^6$. Currently, in most color digital images, each of R, G, and B channels uses an 8-bit byte for storage. In other words, a representation range of each channel is a grayscale level of 0 to 255. 0 to 255 herein is a dynamic range of an image. In the real world, a dynamic range in a same scenario is from $10^{-3}$ to $10^6$, which is referred to as a high dynamic range (high dynamic range, HDR). Correspondingly, a dynamic range of a common picture is a low dynamic range (low dynamic range, LDR). An imaging process of a digital camera is actually mapping from the high dynamic range of the real world to a low dynamic range of a photo. This is usually a nonlinear process.

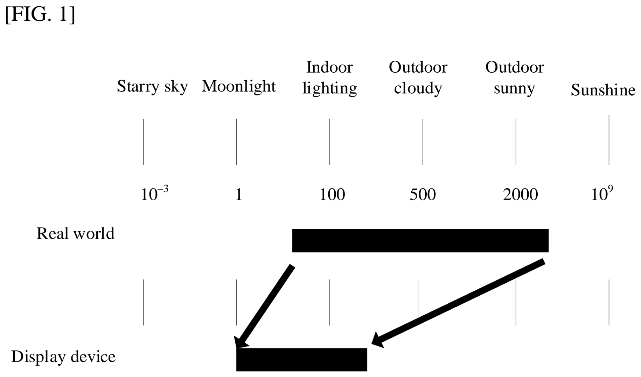

FIG. 1 is a diagram of dynamic range mapping.

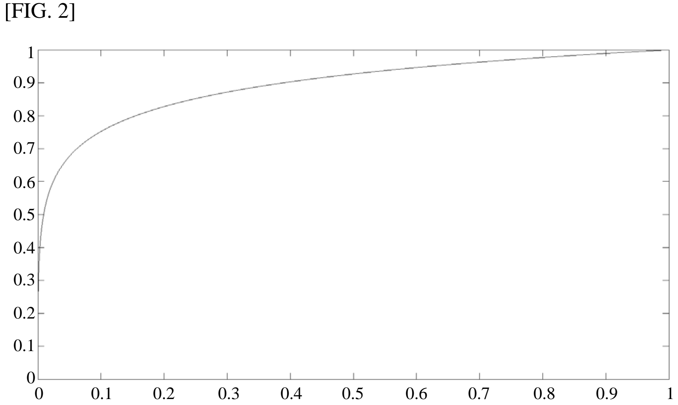

A PQ optical-electro transfer function is a perceptual quantizer optical-electro transfer function provided based on a luminance perception model for human eyes. Refer to FIG. 2. FIG. 2 is an image of a PQ optical-electro transfer function. The PQ optical-electro transfer function represents a conversion relationship between a linear signal value of an image pixel and a nonlinear signal value in a PQ domain.

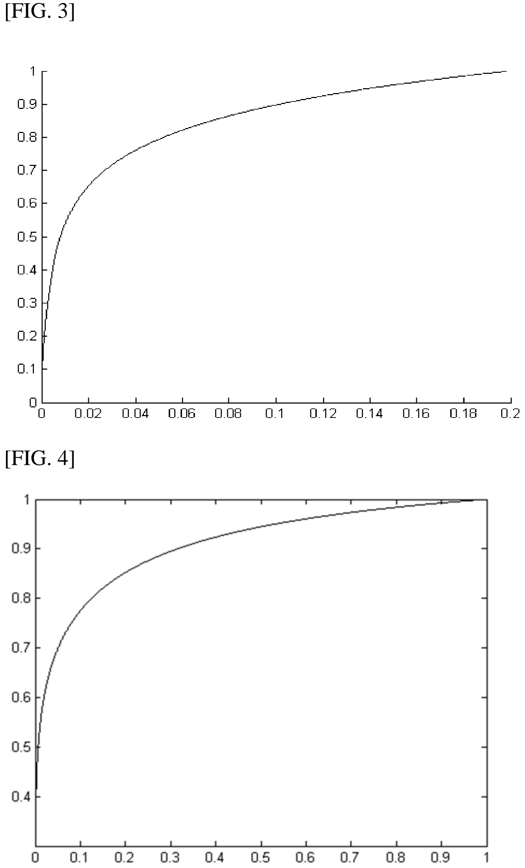

The HLG optical-electro transfer function is obtained by improving a conventional gamma curve. Refer to FIG. 3. FIG. 3 is an image of an HLG optical-electro transfer function. For the HLG optical-electro transfer function, the conventional gamma curve is used in the lower segment, and a log curve is added to the upper segment. The HLG optical-electro transfer function represents a conversion relationship between a linear signal value of an image pixel and a nonlinear signal value in an HLG domain.

The SLF optical-electro transfer function is an optimal curve obtained based on luminance delivery in an HDR scene when optical characteristics of human eyes are satisfied. Refer to FIG. 4. FIG. 4 is an image of an SLF optical-electro transfer function. An SLF optical-electro transfer curve indicates a conversion relationship between a linear signal value of an image pixel and a nonlinear signal value in an SLF domain.

Linear space in this application is space in which a linear light signal is located.

Nonlinear space in this application is space in which a signal obtained after a linear light signal is converted by using a nonlinear curve is located. Common nonlinear curves of the HDR include a PQ EOTF-1 curve, an HLG OETF curve, and the like, and a common nonlinear curve of the SDR includes a gamma curve. Generally, it is considered that a signal obtained after a linear light signal is encoded by using the nonlinear curve is visually linear relative to human eyes. It should be understood that the nonlinear space may be considered as visual linear space.

Gamma correction (gamma correction) is a method for performing nonlinear tone editing on an image. A dark-colored part and a light-colored part in the image signal can be detected, and proportions of the dark-colored part and the light-colored part are increased, to improve image contrast effect. Optical-electro transfer features of current displays, photographic films, and many electronic cameras may be nonlinear. A relationship between outputs and inputs of these nonlinear components may be represented by using a power function, namely: output=(input)$\gamma$.

Because a visual system of the human being is nonlinear, and the human being perceives a visual stimulation through comparison, nonlinear conversion is performed on a color value output by a device. Stimulation is enhanced by the outside world at a particular proportion, and for the human being, such stimulation evenly increases. Therefore, for perception of the human being, a physical quantity increasing in a geometric progression is even. To display input colors based on a visual law of the human being, nonlinear conversion in the form of the power function is needed, to convert a linear color value into a nonlinear color value. A value $\gamma$ of gamma may be determined based on an optical-electro transfer curve of color space.

For the color space (color space), colors may be different perceptions of eyes for light rays having different frequencies, or may represent objectively existing light having different frequencies. The color space is a color range defined by a coordinate system that is established by people to represent colors. Color gamut and a color model define color space together. The color model is an abstract mathematical model that represents a color by using a group of color components. The color model may include, for example, a red green blue (red green blue, RGB) mode and a cyan magenta yellow key plate (cyan magenta yellow key plate, CMYK) mode. The color gamut is a sum of colors that can be generated by a system. For example, Adobe RGB and sRGB are different color space based on an RGB model. Each device such as a display or a printer has color space, and can generate colors only in color gamut of the device. When an image is transferred from one device to another device, because each device converts the image based on the color space of the device and displays RGB or CMYK, colors of the image may change on different devices.

RGB space is space in which a video signal is quantitatively represented by luma of red, green, and blue. YCC space is color space representing luma-chroma separation. Three components of a YCC space video signal respectively represent luma-chroma-chroma. Common YCC space video signals include YUV, YCbCr, ICtCp, and the like.

To obtain an image with a higher dynamic range, a bit width of the image is usually greater than or equal to 10 bits (bit). Common encoding standards that support HDR include H.266, H.265, and a high efficiency image format (high efficiency image format, HEIF). The common joint photographic experts group (joint photographic experts group, JPEG) and H.264 support only 8-bit encoding, and therefore cannot well support HDR videos and HDR images.

An HDR image or an HDR video may need to be transcoded in a delivery or transmission process. In a current HDR transcoding scheme, the HDR image or the HDR video is directly transcoded. After the HDR image or the HDR video is decoded, HDR pixel values and an HDR format identifier and information are obtained. The HDR pixel values usually need to be processed (for example, processing such as image upsampling and downsampling and enhancement). The HDR format identifier and information, and processed HDR pixel values are then sent to an encoder for re-encoding. A re-encoded HDR image or HDR video is delivered to another device. This scheme (which may be referred to as a "single-layer transcoding scheme") in which an HDR image or an HDR video is directly transcoded may cause an exception in a transcoded HDR image or HDR video, affecting user experience. This is because when a single-layer encoded HDR bitstream is transcoded (decoded and then encoded), a transcoding system needs to correctly send all HDR information obtained by a decoder to the encoder. If the information is lost, the transcoding system fails to encode the information in a correct format. As a result, an incorrect bitstream is generated, and abnormal visual effect occurs when the user watches the content, severely affecting user experience. Currently, many delivery and transcoding systems in the market are not upgraded to support correct sending of HDR information from the decoder side to the encoder side. Mainstream mobile phone and application manufacturers have received many user complaints in this regard.

For ease of description, the term "HDR object" is used in some embodiments of this application. The HDR object may be a static HDR image (which may also be referred to as an HDR image, an HDR photo, an HDR picture, or the like), or may be an HDR video or another type of dynamic HDR image, or may be a frame of image in an HDR video or a dynamic HDR image.

It may be understood that, for ease of description, in some embodiments of this application, an HDR image is used as an example to describe the technical solutions of this application. However, it may be understood that these embodiments may be applied not only to HDR images, but also to other HDR objects, such as an HDR video, a dynamic HDR image, or a frame of image in an HDR video or a dynamic HDR image.

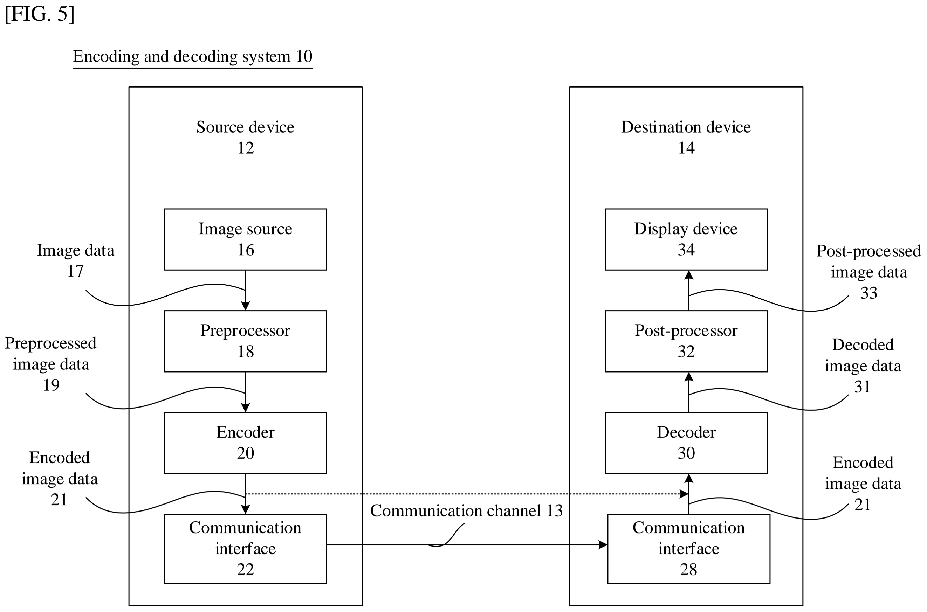

The following describes, with reference to FIG. 5, an encoding and decoding system to which this application is applied. FIG. 5 is a block diagram of an encoding and decoding system to which an embodiment of this application is applied, for example, a video encoding and decoding system 10 (or an encoding and decoding system 10 for short) to which a technology of this application may be applied. A video encoder 20 (or an encoder 20 for short) and a video decoder 30 (or a decoder 30 for short) of the video encoding and decoding system 10 represent devices that may be configured to execute technologies based on various examples described in this application.

As shown in FIG. 5, the encoding and decoding system 10 includes a source device 12. The source device 12 is configured to provide encoded data such as encoded image data 21 to a destination device 14 for decoding the encoded data.

The source device 12 includes an encoder 20. Optionally, the source device 12 may further include an image source 16, a preprocessor 18 (or a preprocessing unit), and a communication interface or a communication unit 22.

The image source 16 may include or be any type of image capture device for capturing a real-world image, and/or any type of image generation device, for example, a computer graphics processing unit for generating a computer animated image, or any type of device for obtaining and/or providing a real-world image, a computer-generated image (for example, screen content, a virtual reality (virtual reality, VR) image, and/or any combination thereof (for example, an augmented reality (augmented reality, AR) image)). The image source may be any type of internal memory or memory storing any of the foregoing images.

To distinguish processing performed by the preprocessor 18 or the preprocessing unit 18, an image or image data 17 may also be referred to as a raw image or raw image data 17.

The preprocessor 18 is configured to: receive the (raw) image data 17 and perform preprocessing on the image data 17 to obtain preprocessed image data 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to: receive the preprocessed image data 19 and provide the encoded image data 21.

The communication interface 22 in the source device 12 may be configured to: receive the encoded image data 21 and send the encoded image data 21 (or any further processed version thereof) over a communication channel 13 to another device, for example, the destination device 14 or any other device, for storage or reconstruction.

The destination device 14 includes the decoder 30 (for example, the video decoder 30), and may additionally, that is, optionally, include a communication interface or communication unit 28, a post-processor 32 (or post-processing unit 32), and a display device 34.

The communication interface 28 in the destination device 14 is configured to receive the encoded image data 21 (or any other processed version) directly from the source device 12 or any other source device such as a storage device. For example, the storage device is an encoded image data storage device, and provides the encoded image data 21 for the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any type of combination thereof. For example, the communication interface 22 may be configured to: encapsulate the encoded image data 21 into an appropriate format such as a packet, and/or process the encoded image data by using any type of transmission encoding or processing for transmission over a communication link or communication network. The communication interface 28 corresponds to the communication interface 22 and may be, for example, configured to: receive the transmitted data and process the transmitted data by using any type of corresponding transmission decoding or processing and/or decapsulation, to obtain the encoded image data 21. The communication interface 22 and communication interface 28 each may be configured as a unidirectional communication interface indicated by an arrow of the corresponding communication channel 13 pointing from the source device 12 to the destination device 14 in FIG. 5, or a bidirectional communication interface; and may be configured to send and receive a message and the like, to establish a connection, confirm and exchange any other information related to the communication link and/or data transmission such as transmission of the encoded image data.

The decoder 30 is configured to: receive the encoded image data 21, and provide decoded image data 31 or a decoded image 31.

The post-processor 32 in the destination device 14 is configured to perform post-processing on the decoded image data 31 (also referred to as reconstructed image data), for example, the decoded image, to obtain post-processed image data 33, for example, a post-processed image. The post-processing performed by the post-processor 32 may include, for example, color format conversion (for example, from YCbCr to RGB), color correction, trimming, or re-sampling, or any other processing, for example, for generating the decoded image data 31 for display, for example, by the display device 34.

The display device 34 in the destination device 14 is configured to receive the post-processed image data 33, for displaying the image to a user, a watcher, or the like. The display device 34 may be or include any type of display for representing the reconstructed image, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

Although FIG. 5 shows the source device 12 and the destination device 14 as separate devices, device embodiments may alternatively include both the source device 12 and the destination device 14, or may include functions of both the source device 12 and the destination device 14, that is, may include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the descriptions, existence and (accurate) division of different units or functions in the source device 12 and/or the destination device 14 shown in FIG. 5 may vary based on actual devices and application. This is apparent to a person skilled in the art.

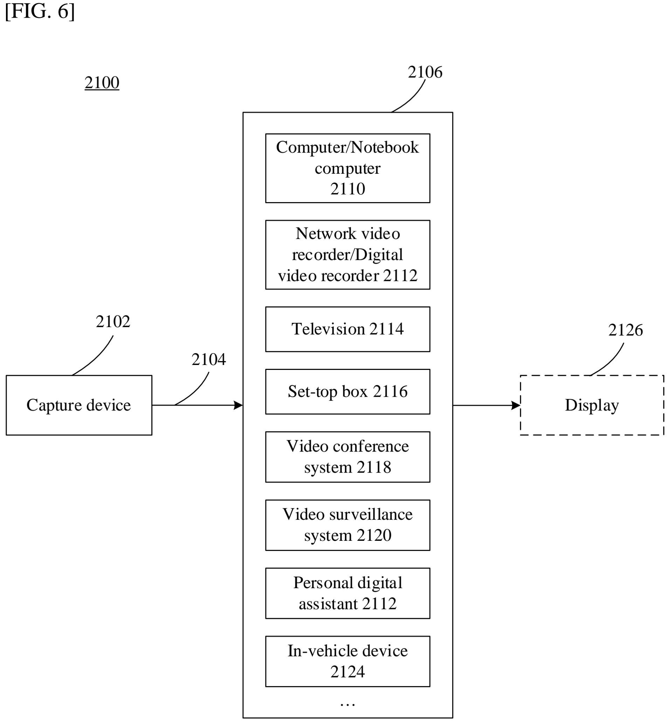

The following describes, with reference to FIG. 6, a content provider system for a content delivery service to which this application is applied. FIG. 6 is a block diagram of a content provider system for implementing a content delivery service to which an embodiment of this application is applied. The content provider system 2100 includes a capture device 2102, a terminal device 2106, and (optionally) a display 2126. The capture device 2102 communicates with the terminal device 2106 over a communication link 2104. The communication link may include the foregoing communication channel 13. The communication link 2104 may include but is not limited to Wi-Fi, Ethernet, wired, wireless (3G/4G/5G), USB, or any type of combination thereof, or the like.

The capture device 2102 may encode captured data by using the encoding method shown in this embodiment of this application. Alternatively, the capture device 2102 may deliver the captured data to a streaming server (not shown in the figure), and the server encodes the data and transmits encoded data to the terminal device 2106. The capture device 2102 includes but is not limited to a camera, a smartphone or a tablet computer, a computer or a notebook computer, a video conference system, a personal digital assistant (personal digital assistant, PDA), an in-vehicle device, or any combination thereof. In some embodiments, the capture device 2102 may include the foregoing source device 12.

The terminal device 2106 in the content provider system 2100 receives and regenerates decoded data. The terminal device 2106 may be a device with data receiving and restoration capabilities, such as a smartphone or a tablet computer, a computer/notebook computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant 2122, an in-vehicle device 2124, or any combination thereof, or the like capable of decoding the encoded data. In some embodiments, the terminal device 2106 may include the foregoing destination device 14. The terminal device 2106 may decode the received data. In some embodiments, the terminal device 2106 may be a video play application, a streaming media play application, a streaming media play platform, a live streaming platform, or the like that runs on the terminal device.

For a terminal device with a display, for example, the smartphone or the tablet computer, the computer or the notebook computer 2110, the NVR/DVR 2112, the television 2114, the PDA 2122, or the in-vehicle device 2124, the terminal device may send the decoded data to the display of the terminal device. For a terminal device without a display, for example, the STB 2116, the video conference system 3118, or the video surveillance system 2120, the device is connected to the external display 2126, to receive and display the decoded data.

When each device in this system performs encoding or decoding, an image encoding device or an image decoding device shown in this embodiment of this application may be used.

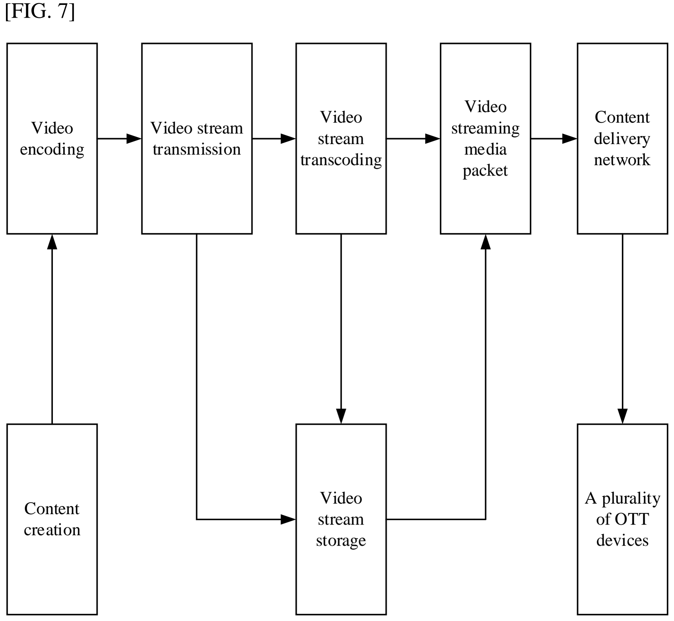

The following describes, with reference to FIG. 7, a streaming media system to which an embodiment of this application is applicable. FIG. 7 is a schematic flowchart of working of a streaming media system to which an embodiment of this application is applicable.

The streaming media system includes a content creation module, which generates required content data, for example, a video or audio. The streaming media system further includes a video encoding module, which encodes generated content by using an encoder. The streaming media system further includes a video stream transmission module, which transmits an encoded video in a form of a bitstream. Optionally, a format of a video stream may be converted into a bitstream format of a transport protocol commonly used by an OTT (over-the-top) device. For example, the protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-Time Messaging Protocol, RTMP), or any combination thereof. Optionally, video stream storage may be performed to store an original format of the video stream and/or a plurality of converted bitstream formats, for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or a stored video stream. Further, the streaming media system further includes a content delivery network (content delivery network, CDN), and the CDN is configured to deliver the video streaming media packet to a plurality of OTT devices, such as a mobile phone, a computer, a tablet computer, a home projector, or the like.

It should be noted that video encoding, video stream transmission, video stream transcoding, video stream storage, video streaming media packet generation, and the content delivery network may all be implemented on a cloud server.

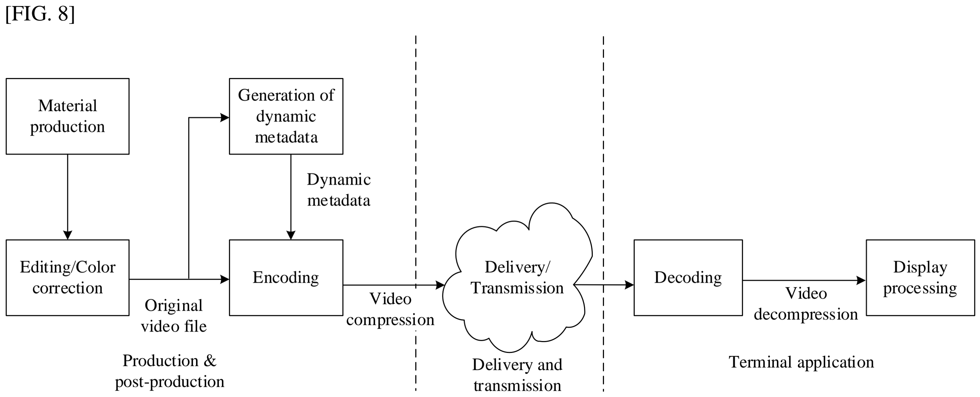

The following describes, with reference to FIG. 8, an example diagram of an end-to-end process according to this application.

As shown in FIG. 8, an original video file (which may also be referred to as a master file) is obtained through procedures such as material production (for example, shooting a video, making a computer graphics (computer graphics, CG) video, or the like), editing, and color correction. Then, corresponding dynamic metadata is obtained based on the original video file. After the original video file and the dynamic metadata are encoded, a compressed video is obtained. The compressed video is delivered/transmitted to a terminal device (for example, a computer, a set-top box, a mobile phone, or a tablet computer). The terminal device decodes the compressed video to obtain a decompressed video, and then displays the decompressed video to a user by using a display device (for example, a display or a television).

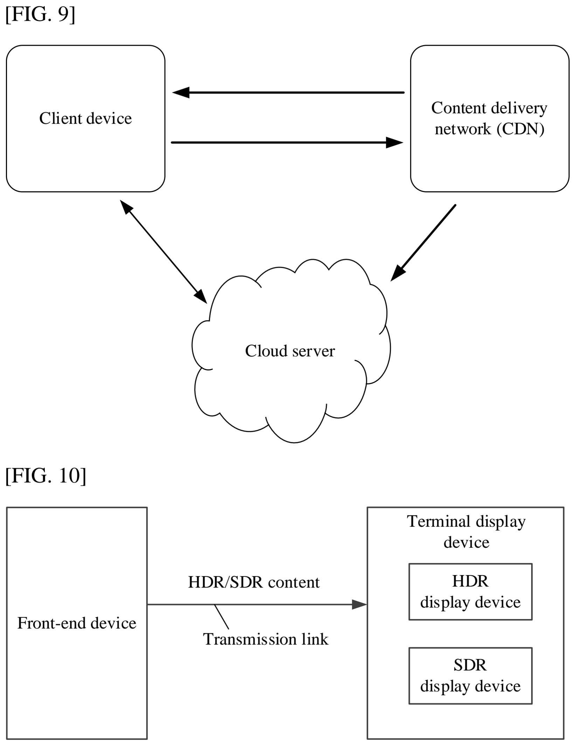

The following describes, with reference to FIG. 9, an example architecture of a streaming media system in this application. The architecture of the streaming media system includes a client device, a content delivery network, and a cloud server.

A user on the client device sends a play or playback request to the cloud platform.

The cloud platform makes a decision, responds to the client device, and sends an address of the requested content of the client on the CDN to the client device.

Then, based on the address, the client device requests the CDN to play the content, and the CDN provides the content for the client device, and finally completes the request of the client device.

The following describes, with reference to FIG. 10, a system architecture to which an embodiment of this application is applicable. FIG. 10 is a diagram of a possible system architecture to which an embodiment of this application is applicable. The system architecture in this embodiment of this application includes a front-end device, a transmission link, and a terminal display device.

The front-end device is configured to acquire or produce HDR/SDR content (for example, an HDR/SDR video or image).

In a possible embodiment, the front-end device may be further configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and the HDR content, obtain, based on the global mapping information and the local mapping information included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video acquisition device, or may be a video production device. The video acquisition device may be a device such as a video camera, a camera, or an image drawing machine. The terminal display device may be a device with a video play function, such as virtual reality (virtual reality, VR) glasses, a mobile phone, a tablet computer, a television, or a projector.

Optionally, the transmission link between the front-end device and the terminal display device may be a wireless connection or a wired connection. The wireless connection may use technologies such as long term evolution (long term evolution, LTE), 5th generation (5th generation, 5G) mobile communication, and future mobile communication. The wireless connection may further include technologies such as wireless-fidelity (wireless-fidelity, Wi-Fi), Bluetooth, and near field communication (near field communication, NFC). The wired connection may include an Ethernet connection, a local area network connection, and the like. This is not specifically limited.

In this application, functions of the front-end device and functions of the terminal display device may be alternatively integrated into a same physical device, for example, a terminal device having a video shooting function, like a mobile phone or a tablet. In this application, some of the functions of the front-end device and some of the functions of the terminal display device may be alternatively integrated into a same physical device. This is not specifically limited.

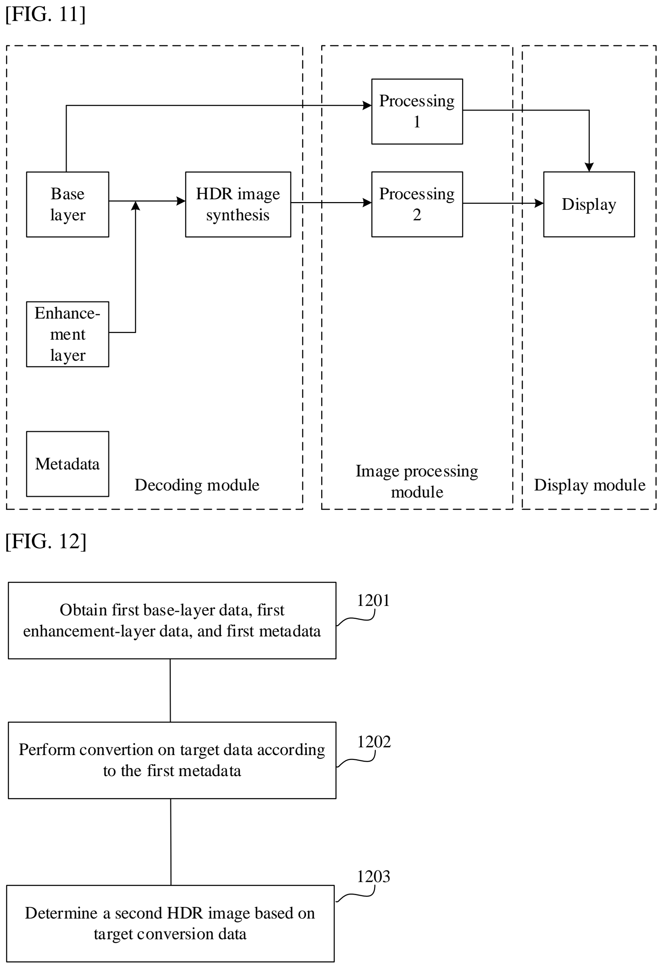

FIG. 11 is a diagram of an image processing method according to an embodiment of this application. As shown in FIG. 11, the image processing method provided in this embodiment of this application may be applied to a decoder side.

A decoding module (which may also be referred to as a decoder) may obtain base-layer data, enhancement-layer data, and metadata from a received bitstream. Then, the decoding module may synthesize the base-layer data and the enhancement-layer data to obtain an HDR image.

A graphics processing module may process the HDR image, and then send a processed HDR image and the base-layer data to a display module. The graphics processing module may further process the base-layer data, and send the processed HDR image and base-layer data to the display module.

The display module may present the HDR image based on the received data (for example, the processed HDR image, or the processed HDR image and the processed base-layer data).

For ease of description, the HDR image obtained by the decoding module based on the base-layer data and the enhancement-layer data may be referred to as an HDR image 1, the HDR image obtained after the graphics processing module processes the HDR image 1 may be referred to as an HDR image 2, and the HDR image displayed by the display module may be referred to as an HDR image 3.

The base-layer data may also be referred to as a base-layer image, a base image, or a basic image, and may be an SDR image or an HDR image with a low dynamic range.

The enhancement-layer data may also be referred to as enhanced data, an enhancement-layer image, or an enhanced image, and may include detail information of some images. In this way, the base-layer data is supplemented by using the image detail information included in the enhancement-layer data, to synthesize an HDR image with a better contrast (that is, the HDR image 1 mentioned above).

A dynamic range of the base-layer data is less than a dynamic range of the HDR image (that is, the HDR image 1) determined based on the base-layer data and the enhancement-layer data.

For example, in some embodiments, the base-layer data may be an SDR image, and the HDR image 1 is an HDR image.

For another example, in some other embodiments, the base-layer data may be an HDR image, but a dynamic range of the HDR image is less than the dynamic range of the HDR image 1.

For example, it is assumed that the dynamic range of the base-layer data is $DR_{x1}$ to $DR_{x2}$, and the dynamic range of the HDR image 1 is $DR_{y1}$ to $DR_{y2}$. In some embodiments, $DR_{y1}$ is less than $DR_{x1}$, and $DR_{y2}$ is greater than $DR_{x2}$. In some other embodiments, $DR_{y1}$ is less than $DR_{x1}$, and $DR_{y2}$ is equal to $DR_{x2}$. In some other embodiments, $DR_{y1}$ is equal to $DR_{x1}$, and $DR_{y2}$ is greater than $DR_{x2}$. In other words, it may be considered that the base-layer data is an image whose dynamic range is less than that of the HDR image 1.

FIG. 12 is a schematic flowchart of an image processing method according to an embodiment of this application. The method shown in FIG. 12 may be performed by an electronic device or a component (for example, a chip or a SoC) in the electronic device. The electronic device may be the destination device 14 in FIG. 5, the terminal device 2106 shown in FIG. 6, or the terminal display device shown in FIG. 10. For ease of description, the method embodiment shown in FIG. 12 below is described by using an example in which the method embodiment is executed by the electronic device.

1201: Obtain first base-layer data, first enhancement-layer data, and first metadata.

The first base-layer data is base-layer data corresponding to a first HDR image, and the first enhancement-layer data is enhancement-layer data corresponding to the first HDR image. In other words, the first base-layer data and the first enhancement-layer data are base-layer data and enhancement-layer data that correspond to the same HDR image.

The first base-layer data, the first enhancement-layer data, and the first metadata may be obtained from a bitstream.

For example, if the bitstream is obtained through encoding by using HEVC or VVC, the electronic device may obtain the first metadata from SEI of the HEVC or the VVC. For another example, in some embodiments, if the bitstream is obtained through encoding by using AVC/H.264, the electronic device may obtain the first metadata from a NAL unit or a reserved packet unit. For another example, in some embodiments, the electronic device may obtain the first metadata from APP extension information encapsulated in a JPEG file interchange format (JPEG file interchange format). For another example, in some embodiments, the electronic device may obtain the first metadata from a data segment encapsulated in a moving picture experts group (moving picture experts group, MPEG)-part 14 (MPEG-4 part 14, MP4).

The electronic device may decode the bitstream, to obtain the first base-layer data, the first enhancement-layer data, and the first metadata. The electronic device may decode the received bitstream by using a decoder (for example, HEVC, JPEG, or HEIF), to obtain the first base-layer data, the first enhancement-layer data, and the first metadata.

A bitstream format of the first base-layer data and the first enhancement-layer data is not limited in this embodiment of this application. In terms of color space, the color space may be YUV, RGB, Lab, HSV, or the like. In terms of a bit width of data, the bit width may be 8 bits, 10 bits, 12 bits, or the like. In terms of a numerical domain, the numerical domain may be PQ, HLG, gamma, log, or the like.

1202: Perform conversion on target data according to the first metadata, to obtain target conversion data.

The target data may be the first base-layer data and/or the first enhancement-layer data. In other words, in some embodiments, the electronic device may convert the first base-layer data based on the first metadata. In some other embodiments, the electronic device may convert the first enhancement-layer data based on the first metadata. In some other embodiments, the electronic device may determine, based on the first metadata, to convert the first base-layer data and the first enhancement-layer data.

In some embodiments, conversion performed on the target data may include one or more of the following: color space conversion, color gamut conversion, or color compensation.

In some embodiments, the first metadata may include conversion location information. The conversion location information indicates a location at which conversion occurs. For example, conversion may occur before a second HDR image is determined and/or after the second HDR image is determined. If conversion occurs before the second HDR image is determined, the target data may be converted. If conversion occurs after the second HDR image is determined, the second HDR image may be converted.

In some other embodiments, the location at which conversion occurs may be preset or pre-negotiated. In this case, the corresponding target data may be converted directly based on the preset or pre-negotiated location at which conversion occurs. For example, if the preset or pre-negotiated location is before the second HDR image is determined, the target data may be converted before the second HDR image is determined; or if the preset or pre-negotiated location is after the second HDR image is determined, the determined second HDR image may be converted after the second HDR image is determined.

In some embodiments, the target data is determined based on the conversion location information. For example, if conversion occurs after the second HDR image is determined, the target data includes second HDR data. For another example, if conversion occurs before the second HDR image is determined, the target data includes the first base-layer data and/or the first enhancement-layer data.

In some embodiments, the first metadata may include conversion determination information, where the conversion determination information indicates whether to convert the target data. For example, based on indicated content, the conversion determination information may be classified into first conversion determination information or second conversion determination information, where the first conversion determination information indicates to convert the target data, and the second conversion determination information indicates not to convert the target data. For example, if a conversion indication carried in the first metadata is the first conversion determination information, the target data may be converted, and then the second HDR image is obtained based on converted data; or if the conversion determination information carried in the first metadata is the second conversion determination information, the target data does not need to be converted.

In some other embodiments, whether to convert the target data may also be pre-determined, pre-negotiated, or determined based on the target data. For example, in some embodiments, it may be determined, by default or presetting, that the first base-layer data is always converted but the first enhancement-layer data is not converted (in this case, the target data is the first base-layer data). For another example, in some other embodiments, whether the target data needs to be converted may be determined based on the target data. For example, it is assumed that the target data is the first base-layer data and color space needs to be converted. If it is determined that color space of the first base-layer data is different from target color space (for example, RGB color space), the first base-layer data needs to be converted to obtain converted first base-layer data; or if it is determined that the color space of the first base-layer data is the same as the target color space, the first base-layer data does not need to be converted.

In some embodiments, the first metadata may further include conversion object information. The conversion object information indicates the target data that needs to be converted. For example, in some embodiments, the conversion object information may indicate that the target data that needs to be converted is the first base-layer data. For another example, in some embodiments, the conversion object information may indicate that the target data that needs to be converted is the first enhancement-layer data. For another example, in some embodiments, the conversion object information may indicate that the target data that needs to be converted is the first base-layer data and the first enhancement-layer data. For another example, in some embodiments, the conversion object information may indicate that the target data that needs to be converted is second HDR image data.

In some other embodiments, the target data may be preset or pre-negotiated. In this case, the target data may be directly converted. For example, in some embodiments, the preset or pre-negotiated target data is the first base-layer data. In this case, the first base-layer data may be directly converted.

In some embodiments, the first metadata may further include conversion scheme information. The conversion scheme information indicates a conversion scheme for the target data. The conversion scheme includes one or more of the following: color space conversion, color gamut conversion, or color compensation.

In some other embodiments, the conversion scheme may be preset or pre-negotiated. In this case, the target data may be converted directly based on the preset or pre-negotiated conversion scheme.

In some embodiments, the first metadata may carry conversion indication information. In some embodiments, the conversion indication information may include one or more of the following information: the conversion location information, the conversion determination information, the conversion object information, and the conversion scheme information. In some embodiments, the conversion indication information may include the conversion location information, the conversion determination information, the conversion object information, or the conversion scheme information. In other words, the first metadata may carry the four pieces of information. The electronic device may determine, based on the four pieces of information carried in the first metadata, a location at which conversion occurs, whether conversion is required, and the target data. In some other embodiments, the conversion indication information may include some information in the four pieces of information. For example, in some embodiments, the conversion indication information may include the conversion location information in the foregoing four pieces of information. In this case, the electronic device may determine, based on the conversion location information, a location at which conversion needs to be performed. Then, the electronic device may determine, based on a preset or pre-negotiated result, the target data, the conversion scheme, and whether the target data needs to be converted. For another example, in some other embodiments, the conversion indication information may include the conversion location information and the conversion scheme information. In this case, the electronic device may determine the target data based on presetting or pre-agreement, and determine the conversion location and the conversion scheme based on the conversion location information and the conversion scheme information. In addition, when receiving the conversion indication information, the electronic device may determine that the target data needs to be converted. In other words, in this case, it may be considered that the conversion indication information indicates that the target data needs to be converted. For another example, in some embodiments, the conversion indication information may include the conversion location information, the conversion scheme information, and the conversion object information. In this case, the electronic device may determine the conversion location, the conversion object, and the target data based on the conversion indication information. Similarly, when receiving the conversion indication information, the electronic device may determine that the target data needs to be converted. In other words, in this case, it may be considered that the conversion indication information indicates that the target data needs to be converted.

In some embodiments, it is determined, based on the first metadata, to convert the target data, and then the target data is converted to obtain a target conversion result. For example, the first metadata may include the foregoing conversion indication information. For example, the first metadata may include one or more of the foregoing conversion location information, conversion determination information, conversion object information, and conversion scheme information.

In some embodiments, some information in the foregoing information may be implicitly indicated by using other information. For example, in some embodiments, if the conversion location information in the first metadata indicates that the conversion location is before the second HDR image is determined, it may indicate that the target data needs to be converted. For example, it is assumed that two bits in the first metadata may be used to carry the conversion location information. If values of the two bits are 01, it indicates that the conversion location is before the second HDR image is determined; if the values of the two bits are 10, it indicates that the conversion location is after the second HDR image is determined (that is, the second HDR image needs to be converted); or if the values of the two bits are 00 or 11, it indicates that the target data or the second HDR image does not need to be converted. For another example, as described above, the target data may be the first base-layer data and/or the first enhancement-layer data. In this case, if the conversion determination information indicates that the target data needs to be converted, it may be determined that conversion occurs before the second HDR image is determined. In some embodiments, the conversion determination information may be further used to determine whether the second HDR image needs to be converted. For example, if the conversion determination information indicates that the target data does not need to be converted, it may be determined that the second HDR image needs to be converted. Certainly, in some other embodiments, whether the second HDR image needs to be converted may also be determined by using other information. For example, the conversion location information, the conversion object information, or separate indication information indicating whether to convert the second HDR image may be used. For another example, in some embodiments, if the target data indicated by the conversion object information is the first base-layer data, it indicates that the first base-layer data needs to be converted; if the target data indicated by the conversion object information is the first enhancement-layer data, it indicates that the first enhancement-layer data needs to be converted; or if the conversion object information indicates the first base layer data and the first enhancement-layer data, it indicates that the first base-layer data and the first enhancement-layer data need to be converted. For example, two bits in the first metadata may be used to carry the conversion object information. If values of the two bits are 01, it indicates that the target data is the first base-layer data; if the values of the two bits are 10, it indicates that the target data is the first enhancement-layer data; if the values of the two bits are 11, it indicates that the target data is the first base-layer data and the first enhancement-layer data; or if the values of the two bits are 00, it indicates that the first base-layer data and the first enhancement-layer data do not need to be converted.

It may be understood that, in addition to the foregoing information, the first metadata may also carry other information, such as a data format, region division information, region traversal sequence information, an image feature, an encoding compression format, a curve parameter, or other data, and one or more metadata information units. The first metadata information unit may further include data such as coordinate information, an image feature, and a curve parameter.

As described above, the target data may be the first base-layer data and/or the first enhancement-layer data. The following describes how to convert the target data.

Converting the first base-layer data:

Color space conversion:

For example, the first base-layer data has first color space. The first base-layer data may be converted from the first color space to second color space through color space conversion. The first color space is different from the second color space.

For example, in some embodiments, color space conversion may be performed on the first base-layer data by using K( ), to obtain converted first base-layer data (that is, the target conversion data). K( ) may be a default matrix or may be a conversion matrix indicated by the first metadata. The first metadata may carry a parameter of the conversion matrix. No specific color space is specified in this application, including but not limited to RGB, Lab, YUV, HSV, and the like.

For another example, in some other embodiments, the color space of the first base layer may be converted into specified color space. For ease of description, the specified color space may be referred to as the target color space. The target color space may be one of RGB, Lab, YUV, HSV, and the like. For example, in some embodiments, assuming that the target color space is the RGB color space, the electronic device may perform color space conversion on the first base-layer data to obtain the target conversion data, where color space of the target conversion data is the RGB color space.

In some embodiments, the target color space may be preset or pre-negotiated.

In some other embodiments, the target color space may alternatively be determined based on the first enhancement-layer data. The target color space is color space of the first enhancement-layer data.

In some other embodiments, the first metadata may further carry one piece of indication information, where the indication information indicates the target color space.

Color gamut conversion:

For example, the first base-layer data uses a first color gamut. The first base-layer data may be converted from the first color gamut to a second color gamut through color gamut conversion. The first color gamut is different from the second color gamut.

For example, in some embodiments, color gamut conversion may be performed on the first base-layer data by using T( ), to obtain converted first base-layer data (that is, the target conversion data). T( ) may be a default matrix or may be a conversion matrix indicated by the first metadata. The first metadata may carry a parameter of the conversion matrix. No specific color gamut is specified in this application, including but not limited to BT.2020, BT.709, DCI-P3, sRGB, and the like.

For another example, in some other embodiments, the color gamut of the first base layer may be converted into specified color gamut. For ease of description, the specified color gamut may be referred to as target color gamut. The target color gamut may be one of BT.2020, BT.709, DCI-P3, sRGB, and the like. For example, in some embodiments, assuming that the target color gamut is sRGB color gamut, the electronic device may perform color gamut conversion on the first base-layer data to obtain the target conversion data, where color gamut of the target conversion data is the sRGB color gamut.

In some embodiments, the color gamut may be preset or pre-negotiated.

In some other embodiments, the color gamut may alternatively be determined based on the first enhancement-layer data. The color gamut is color gamut of the first enhancement-layer data.

In some other embodiments, the conversion scheme information may further include one piece of indication information, where the indication information indicates the color gamut.

Color compensation:

For example, in some embodiments, color compensation may be performed on the first base-layer data by using a compensation method C( ), to obtain converted first base-layer data (that is, the target conversion data).

In some embodiments, the compensation method C( ) may be a color compensation matrix. The color compensation matrix may be preset or may be indicated by the first metadata.

In some embodiments, the compensation method C( ) may be a transfer function. For example, the transfer function may be a logarithmic function, an exponential function, or the like. The transfer function may be preset (or pre-negotiated) or may be indicated by the first metadata. For example, in some embodiments, the transfer function may be preset, and a parameter (for example, an exponent) of the transfer function may be indicated by the first metadata. For another example, in some embodiments, the parameter of the transfer function may be preset, and the transfer function is indicated by the first metadata. For another example, in some other embodiments, the transfer function and the parameter are both preset or indicated by the first metadata.

In some embodiments, the compensation method C( ) may be a compensation value and a corresponding compensation method. For example, an addition, subtraction, multiplication, and/or division operation is performed on data of one or more channels in the base-layer data and the compensation value. The compensation value and the corresponding compensation method may be preset (or pre-negotiated), or may be indicated by the first metadata. For example, in some embodiments, the compensation method may be preset, and the first metadata may carry the compensation value. For another example, in some embodiments, the compensation value is preset, and the compensation method is indicated by the first metadata. For another example, in some embodiments, both the compensation value and the compensation method may be preset or indicated by the first metadata.

It may be understood that, if the first base-layer data needs to be converted for a plurality of times, a conversion object of the first conversion is the first base-layer data, and each conversion object except the first conversion is a previous conversion result. For example, it is assumed that color space conversion and color gamut conversion need to be performed on the first base-layer data. In this case, color space conversion may be first performed on the first base-layer data, to obtain the first base-layer data whose color space is converted; and then the first base-layer data whose color space is converted is converted, to obtain a final conversion result (that is, the target conversion data).

Converting the first enhancement-layer data:

Color space conversion:

A method for performing color space conversion on the first enhancement-layer data is similar to the method for performing color space conversion on the first base-layer data. For example, a default matrix or a conversion matrix indicated by the first metadata may be used to perform color space conversion on the first enhancement-layer data, to obtain converted first enhancement-layer data. For another example, color space of the first enhancement-layer data may be converted into specified color space. The specified color space may be preset or pre-negotiated, or may be determined based on the first base-layer data, or may be indicated by the first metadata. For the method for performing color space conversion on the first enhancement-layer data, refer to the foregoing method for performing color space conversion on the first base-layer data. For brevity, details are not described herein again.

Color gamut conversion:

Similarly, a color gamut conversion method for the first enhancement-layer data is similar to the color gamut conversion method for the first base-layer data. For example, a default matrix or a conversion matrix indicated by the first metadata may be used to perform color gamut conversion on the first enhancement-layer data, to obtain converted first enhancement-layer data. For another example, color gamut of the first enhancement-layer data may be converted into specified color gamut. The specified color gamut may be preset or pre-negotiated, or may be determined based on the first base-layer data, or may be indicated by the first metadata. For a method for performing color gamut conversion on the first enhancement-layer data, refer to the foregoing method for performing color gamut conversion on the first base-layer data. For brevity, details are not described herein again.

Color compensation

Similarly, color compensation may be performed on the first enhancement-layer data by using a compensation method C( ), to obtain converted first enhancement-layer data. The compensation method C( ) may be a color compensation matrix, or may be a transfer function, or may be a compensation value and a corresponding compensation method. The color compensation matrix, the transfer function, the compensation value, and the corresponding compensation method may be preset (or pre-negotiated), or may be indicated by the first metadata. For a specific method for performing color compensation on the first enhancement-layer data, refer to the foregoing method for performing color compensation on the first base-layer data. For brevity, details are not described herein again.

Similarly, the first enhancement-layer data may alternatively be converted for a plurality of times. For a specific conversion method, refer to the conversion method for the first base-layer data. For brevity, details are not described herein again.

In some embodiments, channel conversion may be further performed on the first enhancement-layer data. The first enhancement-layer data may be data obtained after reassembly. For ease of description, the first enhancement-layer data before reassembly may be referred to as raw enhancement-layer data.

In some embodiments, a reassembling method may be replacing some of original channels in the raw enhancement-layer data with a form of a difference or sum of several of the channels. For example, if the original channels are RGB, channels obtained after reassembly may be R, R+P1×G, and R+P2×B. In other words, channels of the first enhancement-layer data are R, R+P1×G, and R+P2×B. The electronic device may restore the channels of the first enhanced data to the original channels by performing channel conversion on the first enhanced data. P1 and P2 may be constants or values indicated in the first metadata.

In some other embodiments, the reassembling method may be replacing some of the original channels in the raw enhancement-layer data with a form of a product or quotient of several of the channels. For example, if the original channels are RGB, the channels obtained after reassembly may be R, R×P3×G, and R×P4×B, or R, R/(P3×G), and R/(P4×B). The electronic device may restore the channels of the first enhanced data to the original channels by performing channel conversion on the first enhanced data. P3 and P4 are constants or values indicated in the first metadata.

Therefore, the channels of the first enhancement-layer data may be restored to the original channels based on channel reassembly information. The channel reassembly information may include, for example, the parameters P1 and P2, P3 and P4, or the values indicated in the first metadata in the foregoing embodiment.

In conclusion, in some embodiments, some or all parameters used in the conversion process may be preset (or pre-negotiated). In some other embodiments, the first metadata may further include conversion parameters, and the target data is converted by using the conversion parameters. For example, the conversion parameters may include one or more of the conversion matrix, the color compensation matrix, the transfer function, the compensation value and the compensation method, the channel reassembly information, and the like.

1203: Determine the second HDR image based on the target conversion data.

For example, if the target data includes the first base-layer data, the target conversion data includes the converted first base-layer data. In this case, the second HDR image may be determined based on the first enhancement-layer data and the converted first base-layer data.

For another example, if the target data includes the first enhancement-layer data, the target conversion data includes the converted first enhancement-layer data. In this case, the second HDR image may be determined based on the first base-layer data and the converted first enhancement-layer data.

For another example, if the target data includes the first enhancement-layer data and the first base-layer data, the target conversion data includes the converted first enhancement-layer data and the converted first base-layer data. In this case, the second HDR image may be determined based on the converted first enhancement-layer data and the converted first base-layer data.

For ease of description, terms "second base-layer data" and "second enhancement-layer data" are introduced. At least one of the second base-layer data and the second enhancement-layer data is the target conversion data. In other words, in some embodiments, the second base-layer data is the converted first base-layer data, and the second enhancement-layer data is the same as the first enhancement-layer data. In some other embodiments, the second base-layer data is the same as the first base-layer data, and the second enhancement-layer data is the converted first enhancement-layer data. In some other embodiments, the second base-layer data is the converted first base-layer data, and the second enhancement-layer data is the converted first enhancement-layer data. In this case, the second HDR image may be determined based on the second base-layer data and the second enhancement-layer data.

For ease of description, Base[i] may be used to represent a value of an $i^{th}$ pixel in the second base-layer data, Enhance[i] may be used to represent a value of an $i^{th}$ pixel in the second enhancement-layer data, and newPicture[i] may be used to represent a value of an $i^{th}$ pixel in the second HDR image. In some embodiments, newPicture[i], Base[i], and Enhance[i] meet the following relationship:

$$newPicture[i]=Base[i]\times f(Enhance[i]), \text{ (formula 1.1)}$$

f( ) may be a default transfer function, or may be a transfer function indicated by the first metadata.

In some other embodiments, newPicture[i], Base[i], and Enhance[i] meet the following relationship:

$$newPicture[i]=Base[i]+f(Enhance[i]), \text{ (formula 1.2)}$$

f( ) may be a default transfer function, or may be a transfer function indicated by the first metadata.

In some embodiments, the second base-layer data and the second enhancement-layer data may be further processed, and then processed data is used to determine the second HDR image. For ease of description, third base-layer data is used to represent the processed second base-layer data, and third enhancement-layer data is used to represent the processed second enhancement-layer data. BaseAfter[i] is used to represent a value of an $i^{th}$ pixel in the third base-layer data, EnhanceAfter[i] is used to represent a value of an $i^{th}$ pixel of the third enhancement-layer data, and newPicture [i] is used to represent the value of the $i^{th}$ pixel of the second HDR image. In some embodiments, newPicture[i], BaseAfter[i], and EnhanceAfter[i] meet the following relationship:

$$newPicture[i]=BaseAfter [i]\times f(EnhanceAfter [i]), \text{ (formula 2.1)}$$

f( ) may be a default transfer function, or may be a transfer function indicated by the first metadata.

In some other embodiments, newPicture[i], Base[i], and Enhance[i] meet the following relationship:

$$newPicture[i]=BaseAfter [i]+f(EnhanceAfter [i]), \text{ (formula 2.2)}$$

f( ) may be a default transfer function, or may be a transfer function indicated by the first metadata.

In some embodiments, the second base-layer data or the second enhancement-layer data may be processed, and then processed data is used to determine the second HDR image. In other words, in some embodiments, the second base-layer data is processed to obtain the third base-layer data, and then the second HDR image is determined based on the third base-layer data and the second enhancement-layer data. In this case, EnhanceAfter[i] in formula 2.1 and formula 2.2 may be replaced with Enhance[i]. In some other embodiments, the second enhancement-layer data may be processed to obtain the third enhancement-layer data, and then the second HDR image is determined based on the second base-layer data and the third enhancement-layer data. In this case, BaseAfter[i] in formula 2.1 and formula 2.2 may be replaced with Base[i].

A method for processing the second base-layer data to obtain the third base-layer data is the same as the method for processing the second enhancement-layer data to obtain the third enhancement-layer data. For brevity, the following uses the enhancement layer as an example to describe how to obtain the third enhancement layer processing. For the method for determining the third base-layer data, refer to the method for determining the third enhancement-layer data.

In some embodiments, the second enhancement-layer data is normalized data. In this case, the first metadata may include a first parameter THH and a second parameter THL. In this case, the third enhancement-layer data may be determined according to the following formula:

$$EnhanceAfter[i]=Enhance[i]×THH+(A–Enhance[i])×THL, \text{ (formula 3.1)}$$

A is a maximum value in the second enhancement-layer data. When the second enhancement-layer data is normalized to a value between 0 and 1.0, A is 1.0.

In some other embodiments, the second enhancement-layer data may be encoded data. For example, the second enhancement-layer data may be nonlinear encoded data such as PQ/HLG/LOG/Gamma. In this case, the second enhancement-layer data may be converted into a linear domain to obtain the third enhancement-layer data. If normalization processing is further performed on the second enhancement-layer data before the nonlinear data is obtained through encoding, the first metadata may include the first parameter THH and the second parameter THL. Then, after the second enhancement-layer data is converted into the linear domain, the third enhanced data may be further determined according to formula 3.1.

In some other embodiments, the first metadata may further include the second parameter THL. In this case, the second parameter THL, EnhanceAfter[i], and Enhance[i] meet the following relationship:

$$EnhanceAfter[i]=Enhance[i]+THL, \text{ (formula 3.2).}$$

In some other embodiments, the first metadata may further include the first parameter THH. In this case, the first parameter THH, EnhanceAfter[i], and Enhance[i] meet the following relationship:

$$EnhanceAfter[i]=THH+A–Enhance[i], \text{ (formula 3.3)}$$

A is the maximum value in the second enhancement-layer data. When the second enhancement-layer data is normalized to a value between 0 and 1.0, A is 1.0.

In some other embodiments, the first metadata may indicate a mapping function TMB( ). In this case, the third enhancement-layer data may be determined according to the mapping function TMB( ) indicated by the first metadata.

In some embodiments, the mapping function TMB( ), EnhanceAfter[i], and Enhance[i] meet the following relationship:

$$EnhanceAfter\beta[i]=TMB(Enhance\beta[i]), \text{ (formula 3.4).}$$

In some other embodiments, the mapping function TMB( ), EnhanceAfter[i], and Enhance[i] meet the following relationship:

$$EnhanceAfter[i]=TMB( )×Enhance\beta[i], \text{ (formula 3.5).}$$

In the encoding process, a mapping relationship may be determined based on a histogram of the intermediate enhanced data, and then the intermediate enhanced data is mapped to another value range interval based on the mapping relationship. A first interval is still used to represent a value range interval of the intermediate enhanced data, and a second interval is used to represent the value range interval obtained through mapping. A value range of the second enhancement-layer data is within the second interval. Based on the foregoing technical solution, the second enhancement-layer data may be remapped back to the first interval. TMB( ) is an inverse function of the mapping relationship. In some embodiments, the first metadata may directly carry TMB( ). In some other embodiments, the first metadata may carry the mapping relationship and/or a parameter of the mapping relationship. TMB( ) may be inferred based on the mapping relationship and/or the parameter of the mapping relationship.

In some embodiments, after the second HDR image is determined, the second HDR image may be further processed to obtain a third HDR image. For example, in some embodiments, color gamut conversion and/or color compensation may be performed on the second HDR image, to obtain the third HDR image. For an implementation of color gamut conversion and/or color compensation, refer to the foregoing description of the first base-layer data or the first enhancement-layer data. Details are not described herein again.

Unless otherwise specified, in this embodiment of this application, the third enhancement-layer data and the third base-layer data are not limited in any domain, and may be in a linear domain, a PQ domain, a log domain, or the like. Color space of the third enhancement-layer data and the third base-layer data is not limited in this application, and may be a color space such as YUV, RGB, Lab, or HSV.

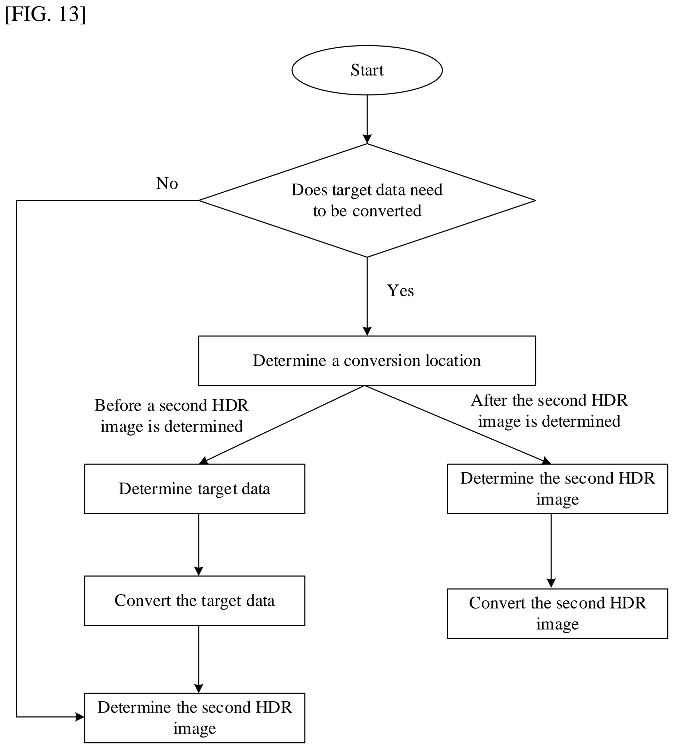

FIG. 13 is a schematic flowchart of an image processing method according to an embodiment of this application. As shown in FIG. 13, after obtaining first base-layer data, first enhancement-layer data, and first metadata, an electronic device may first determine whether target data needs to be converted.

A conversion location is determined when it is determined that the target data needs to be converted. If the conversion location is before the second HDR image is determined, the target data may be the first base-layer data and/or the first enhancement-layer data. After the target data is determined, the target data may be converted, to obtain target conversion data. Then, a second HDR image is determined based on the target conversion data.

If the conversion location is after the second HDR image is determined, the second HDR image may be determined based on the first enhancement-layer data and the first base-layer data, and then the second HDR image is converted.

If it is determined that the target data does not need to be converted, the HDR image may be determined based on the first enhancement-layer data and the first base-layer data.

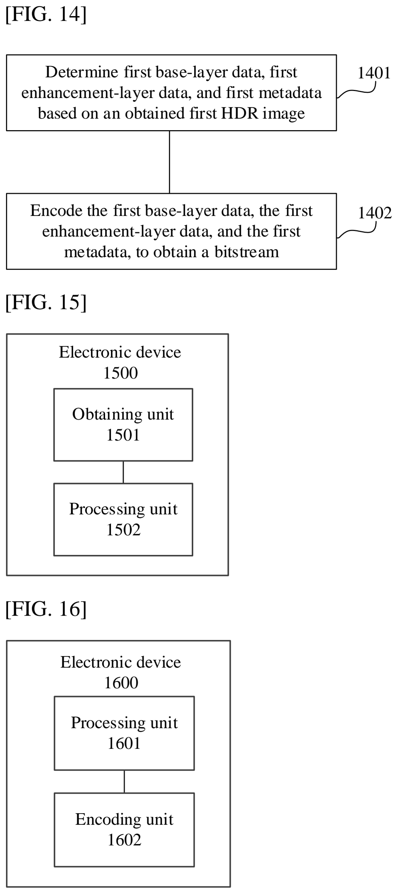

FIG. 14 is a schematic flowchart of another image processing method according to an embodiment of this application. The method shown in FIG. 14 may be performed by an electronic device or a component (for example, a chip or a SoC) in the electronic device. The electronic device may be the source device 12 shown in FIG. 5, the capture device 2102 shown in FIG. 6, or the front-end device shown in FIG. 10. For ease of description, in the following embodiment, it is assumed that the method shown in FIG. 14 is performed by the electronic device.

1401: Determine, based on an obtained first HDR image, first base-layer data and first enhancement-layer data that correspond to the first HDR image, and first metadata, where the first metadata is used in conversion of target data, and the target data includes the first base-layer data and/or the first enhancement-layer data.

A location of the first metadata is not limited in this embodiment of this application. For example, if the bitstream is obtained through encoding by using HEVC or VVC, the first metadata may be located in SEI of the HEVC or the VVC. For another example, if the bitstream is obtained through encoding by using AVC/H.264, the first metadata may be located in a NAL unit or a reserved packet unit. For another example, the first metadata may alternatively be located in APP extension information encapsulated in a JPEG file interchange format (JPEG file interchange format). For another example, in some embodiments, the first metadata may alternatively be located in a data segment encapsulated in a moving picture experts group (moving picture experts group, MPEG)-part 14 (MPEG-4 part 14, MP4).

The encoder is not limited in this embodiment of this application. For example, the encoder may use HEVC, JPEG, or HEIF.

A bitstream format of the first base-layer data and the first enhancement-layer data is not limited in this embodiment of this application. In terms of color space, the color space may be YUV, RGB, Lab, HSV, or the like. In terms of a bit width of data, the bit width may be 8 bits, 10 bits, 12 bits, or the like. In terms of a numerical domain, the numerical domain may be PQ, HLG, gamma, log, or the like.

Conversion performed on the target data may include one or more of the following: color space conversion, color gamut conversion, or color compensation.

The first metadata may carry one or more of the following information: the conversion location information, the conversion determination information, the conversion object information, and the conversion scheme information.

For specific content of the conversion location information, the conversion determination information, the conversion object information, and the conversion scheme information, refer to the foregoing embodiments. For brevity, details are not described herein again.

In some embodiments, the first metadata is used to determine to convert the target data.

In some embodiments, the first metadata is used to determine the target data and convert the target data.

1402: Encode the first base-layer data, the first enhancement-layer data, and the first metadata, to obtain a bitstream.

FIG. 15 is a block diagram of a structure of an electronic device according to an embodiment of this application. The electronic device 1500 shown in FIG. 15 includes an obtaining unit 1501 and a processing unit 1502.

The obtaining unit 1501 is configured to obtain first base-layer data, first enhancement-layer data, and first metadata, where the first base-layer data is base-layer data of a first HDR image, and the first enhancement-layer data is enhancement-layer data of the first HDR image.

The processing unit 1502 is configured to perform conversion on target data according to the first metadata to obtain target conversion data, where the target data is the first base-layer data and/or the first enhancement-layer data.

The processing unit 1502 is further configured to determine a second HDR image based on the target conversion data.

For specific functions and beneficial effects of the obtaining unit 1501 and the processing unit 1302, refer to the foregoing method embodiments. For brevity, details are not described herein.

In some embodiments, the obtaining unit 1501 and the processing unit 1502 may be implemented by a processor.

In some embodiments, the electronic device may be a decoder.

In some embodiments, the electronic device may be the destination device 14 in FIG. 5, the terminal device 2106 shown in FIG. 6, the terminal display device shown in FIG. 10, or the like.

FIG. 16 is a block diagram of a structure of an electronic device according to an embodiment of this application. The electronic device 1600 shown in FIG. 16 includes a processing unit 1601 and an encoding unit 1602.

The processing unit 1601 is configured to determine first base-layer data, first enhancement-layer data, and first metadata based on an obtained first HDR image, where the first metadata is used in conversion of target data, and the target data includes the first base-layer data and/or the first enhancement-layer data.

The encoding unit 1602 is configured to encode the first base-layer data, the first enhancement-layer data, and the first metadata, to obtain a bitstream.

For specific functions and beneficial effects of the processing unit 1601 and the encoding unit 1602, refer to the foregoing embodiments. For brevity, details are not described herein again.

In some embodiments, the processing unit 1601 and the encoding unit 1602 may be implemented by a processor.

In some embodiments, the electronic device may be an encoder.

In some embodiments, the electronic device may be the source device 12 in FIG. 5, the capture device 2102 shown in FIG. 6, the front-end device shown in FIG. 10, or the like.

An embodiment of this application further provides an electronic device. The electronic device may be configured to implement the embodiment of the image processing method (which may be referred to as an encoding method) shown in FIG. 14. The electronic device includes a processor and a memory. The processor is configured to: execute a computer program or instruction stored in the memory, or read data/signaling stored in the memory, to perform the methods in the foregoing method embodiments. The memory may be integrated with the processor, or may be disposed separately. The memory may be further configured to store a bitstream determined by the processor. Optionally, there are one or more processors. Optionally, there are one or more memories. Optionally, the electronic device may further include a transceiver (or a communication interface), and the transceiver (or the communication interface) is configured to receive and/or send a signal. For example, the transceiver may be configured to send the bitstream determined by the processor to another electronic device.

An embodiment of this application further provides an electronic device. The electronic device may be configured to implement the embodiment of the image processing method (which may be referred to as a decoding method) shown in FIG. 12 or FIG. 13. The electronic device includes a processor and a memory. The processor is configured to: execute a computer program or instruction stored in the memory, or read data/signaling stored in the memory, to perform the methods in the foregoing method embodiments. The memory may be integrated with the processor, or may be disposed separately. Optionally, there are one or more processors. Optionally, there are one or more memories. Optionally, the electronic device may further include a transceiver (or a communication interface), and the transceiver (or the communication interface) is configured to receive and/or send a signal. For example, the transceiver may be configured to receive a bitstream.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

An embodiment of this application further provides a system on chip. The system on chip (or may be referred to as a processing system) includes a logic circuit and an input/output interface (input/output interface).

The logic circuit may be a processing circuit in the system on chip. The logic circuit may be coupled and connected to a storage unit, and invoke instructions in the storage unit, so that the system on chip can implement the methods and functions in embodiments of this application. The input/output interface may be an input/output circuit in the system on chip, and outputs information processed by the system on chip, or inputs to-be-processed data or signaling information to the system on chip for processing.

In a solution, the system on chip is configured to implement the foregoing embodiments of the image processing methods. For example, the system on chip is configured to implement a processing-related operation performed by the source device, the capture device, or the front-end device in the foregoing method embodiments.

In a solution, the system on chip is configured to implement the foregoing embodiments of the image processing methods. For example, the system on chip is configured to implement a processing-related operation performed by the destination device, the terminal device, or the terminal display device in the foregoing method embodiments.

An embodiment of this application further provides a computer-readable storage medium, storing computer instructions for implementing the methods performed by the encoding device (for example, the source device, the capture device, or the front-end device) in the foregoing method embodiments.

An embodiment of this application further provides a computer-readable storage medium, storing computer instructions for implementing the methods performed by the decoding device (for example, the destination device, the terminal device, or the terminal display device) in the foregoing method embodiments.

An embodiment of this application further provides a computer program product, including instructions. When the instructions are executed by a computer, the methods performed by the encoding device in the foregoing method embodiments are implemented.

An embodiment of this application further provides a computer program product, including instructions. When the instructions are executed by a computer, the methods performed by the decoding device in the foregoing method embodiments are implemented.

An embodiment of this application further provides a communication system, including the foregoing encoding device and decoding device.

An embodiment of this application further provides a bitstream. The bitstream is determined by using the foregoing image processing method (the encoding method).

An embodiment of this application further provides a memory. The memory is configured to store a bitstream determined by using the foregoing encoding method.

This application further provides a computer device. The computer device includes a memory, and the memory is configured to store a bitstream determined by using the foregoing encoding method.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An image processing method, comprising:

    obtaining first base-layer data, first enhancement-layer data, and first metadata, wherein the first base-layer data is base-layer data corresponding to a first HDR image, and the first enhancement-layer data is enhancement-layer data corresponding to the first HDR image;
    performing conversion on target data according to the first metadata, to obtain target conversion data, wherein the target data is the first base-layer data and/or the first enhancement-layer data; and
    determining a second HDR image based on the target conversion data.

2.  The method according to claim 1, wherein the first metadata comprises conversion location information, and the conversion location information indicates a location at which the conversion occurs; and
    the performing conversion on the target data according to the first metadata comprises:
    performing conversion on the target data according to the conversion location information.

3.  The method according to claim 1 or 2, wherein the first metadata comprises first conversion determination information, and the first conversion determination information indicates that the target data needs to be converted; and
    performing conversion on the target data according to the first metadata comprises:
    performing conversion on the target data according to the first conversion determination information.

4.  The method according to any one of claims 1 to 3, wherein the conversion comprises one or more of the following: color space conversion, color gamut conversion, or color compensation.

5.  The method according to claim 4, wherein when the target data is the first base-layer data and the conversion comprises the color space conversion, performing conversion on the target data according to the first metadata comprises:
    performing the color space conversion on the first base-layer data to obtain the target conversion data, wherein color space of the target conversion data is RGB color space.

6.  The method according to claim 4 or 5, wherein when the target data is the first base-layer data and the conversion comprises the color gamut conversion, performing conversion on the target data according to the first metadata comprises:
    performing the color gamut conversion on the first base-layer data by using T( ), to obtain the target conversion data, wherein T( ) is a default matrix or a conversion matrix indicated by the first metadata.

7.  The method according to claim 4, wherein when the target data comprises the first enhancement-layer data, the conversion further comprises channel conversion, and the channel conversion is used to restore a channel of the first enhancement-layer data to an original channel.

8.  The method according to claims 1 to 7, wherein the first metadata further comprises conversion parameters used when the conversion is performed.

9.  The method according to claim 8, wherein when the conversion comprises the color compensation, the conversion parameters comprise:

    a color compensation matrix;
    a transfer function; or
    a compensation value and a compensation method.

10. The method according to any one of claims 1 to 9, wherein the method further comprises: performing the color gamut conversion and/or the color compensation on the second HDR image.

11. An image processing method, wherein the method comprises:

determining, based on an obtained first HDR image, first base-layer data and first enhancement-layer data that correspond to the first HDR image, and first metadata, wherein the first metadata is used in conversion of target data, and the target data is the first base-layer data and/or the first enhancement-layer data; and
encoding the first base-layer data, the first enhancement-layer data, and the first metadata, to obtain a bitstream.

12. The method according to claim 11, wherein the first metadata comprises conversion location information, and the conversion location information indicates a location at which the conversion occurs.

13. The method according to claim 11 or 12, wherein the first metadata comprises first conversion determination information, and the first conversion determination information indicates that the target data needs to be converted.

14. The method according to any one of claims 11 to 13, wherein the conversion comprises one or more of the following: color space conversion, color gamut conversion, or color compensation.

15. The method according to claim 14, wherein the first metadata further comprises conversion parameters used when the conversion is performed.

16. The method according to claim 15, wherein when the conversion comprises the color gamut conversion, the conversion parameters comprise a conversion matrix.

17. The method according to claim 15, wherein when the conversion comprises the color compensation, the conversion parameters comprise:

a color compensation matrix;
a transfer function; or
a compensation value and a compensation method.

18. An electronic device, wherein the electronic device is configured to implement the method according to any one of claims 1 to 10, and/or is configured to implement the method according to any one of claims 11 to 17.

19. A computer device, comprising a processor, wherein the processor is configured to: be coupled to a memory, and read and execute instructions and/or program code in the memory, to perform the method according to any one of claims 1 to 10, and/or perform the method according to any one of claims 11 to 17.

20. A system on chip, comprising a logic circuit, wherein the logic circuit is configured to: be coupled to an input/output interface and transmit data through the input/output interface, to perform the method according to any one of claims 1 to 10, and/or perform the method according to any one of claims 11 to 17.

21. A computer-readable storage medium, wherein the computer-readable storage medium stores program code, and when the computer program code is run on a computer, the computer is enabled to perform the method according to any one of claims 1 to 10, and/or the method according to any one of claims 11 to 17.

22. A bitstream, wherein the bitstream is determined based on the method according to any one of claims 11 to 17.

[FIG. 1]

[FIG. 2]

[FIG. 3]

[FIG. 4]

[FIG. 5]

Encoding and decoding system 10

[FIG. 6]

2100

2106

2102

2104

2126

Capture device

```
┌─────────────────────────┐
│  Computer/Notebook      │
│  computer               │
│  2110                   │
├─────────────────────────┤
│  Network video          │
│  recorder/Digital       │
│  video recorder 2112    │
├─────────────────────────┤
│  Television 2114        │
├─────────────────────────┤
│  Set-top box 2116       │
├─────────────────────────┤
│  Video conference       │
│  system 2118            │
├─────────────────────────┤
│  Video surveillance     │
│  system 2120            │
├─────────────────────────┤
│  Personal digital       │
│  assistant 2112         │
├─────────────────────────┤
│  In-vehicle device      │
│  2124                   │
└─────────────────────────┘
          …
```

Display

[FIG. 7]

| Video encoding | → | Video stream transmission | → | Video stream transcoding | → | Video streaming media packet | → | Content delivery network |

Content creation → Video encoding

Video stream transmission → Video stream storage

Video stream transcoding → Video stream storage

Video stream storage → Video streaming media packet

Content delivery network → A plurality of OTT devices

[FIG. 8]

Material production

Editing/Color correction

Original video file

Generation of dynamic metadata

Dynamic metadata

Encoding

Video compression

Production & post-production

Delivery/ Transmission

Delivery and transmission

Decoding

Video decompression

Terminal application

Display processing

EP 4 697 716 A1

[FIG. 9]

[FIG. 10]

[FIG. 11]

[FIG. 12]

Obtain first base-layer data, first enhancement-layer data, and first metadata — 1201

Perform convertion on target data according to the first metadata — 1202

Determine a second HDR image based on target conversion data — 1203

[FIG. 13]

```
                          ┌──────────┐
                          │  Start   │
                          └────┬─────┘
                               │
                               ▼
                          ╱─────────────╲
         No              ╱ Does target    ╲
◄────────────────────── ╱  data need       ╲
│                       ╲  to be converted ╱
│                        ╲               ╱
│                         ╲─────────────╱
│                               │
│                              Yes
│                               │
│                               ▼
│                      ┌───────────────────────────┐
│                      │ Determine a conversion     │
│                      │ location                   │
│                      └───────────────────────────┘
│              Before a second HDR        After the second HDR
│              image is determined        image is determined
│                      │                            │
│                      ▼                            ▼
│            ┌──────────────────┐       ┌──────────────────────┐
│            │ Determine target │       │ Determine the second │
│            │ data             │       │ HDR image            │
│            └────────┬─────────┘       └──────────┬───────────┘
│                     │                            │
│                     ▼                            ▼
│            ┌──────────────────┐       ┌──────────────────────┐
│            │ Convert the      │       │ Convert the second   │
│            │ target data      │       │ HDR image            │
│            └────────┬─────────┘       └──────────────────────┘
│                     │
│                     ▼
│            ┌──────────────────┐
└───────────►│ Determine the    │
             │ second HDR image │
             └──────────────────┘
```

[FIG. 14]

```
┌─────────────────────────────────────┐
│ Determine first base-layer data, first │   1401
│ enhancement-layer data, and first metadata │
│ based on an obtained first HDR image │
└─────────────────────────────────────┘
                   │
┌─────────────────────────────────────┐
│ Encode the first base-layer data, the first │   1402
│ enhancement-layer data, and the first │
│ metadata, to obtain a bitstream │
└─────────────────────────────────────┘
```

[FIG. 15]

```
┌─────────────────────────────────┐
│        Electronic device        │
│            1500                 │
│   ┌─────────────────────────┐   │
│   │     Obtaining unit      │   │
│   │         1501            │   │
│   └─────────────────────────┘   │
│               │                 │
│   ┌─────────────────────────┐   │
│   │    Processing unit       │   │
│   │         1502            │   │
│   └─────────────────────────┘   │
└─────────────────────────────────┘
```

[FIG. 16]

```
┌─────────────────────────────────┐
│        Electronic device        │
│            1600                 │
│   ┌─────────────────────────┐   │
│   │     Processing unit     │   │
│   │         1601            │   │
│   └─────────────────────────┘   │
│               │                 │
│   ┌─────────────────────────┐   │
│   │      Encoding unit       │   │
│   │         1602            │   │
│   └─────────────────────────┘   │
└─────────────────────────────────┘
```

## INTERNATIONAL SEARCH REPORT

| International application No. |
|---|
| **PCT/CN2024/111111** |

**A. CLASSIFICATION OF SUBJECT MATTER**

H04N19/30(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, IEEE: 视频, 图像, 编码, 解码, HDR, 高动态, 基本层, 基础层, 增强层, 转换, 转码, 色彩空间, 色域, 颜色, 补偿, video, encode, decode, enhancement, base, color, layer

**C. DOCUMENTS CONSIDERED TO BE RELEVANT**

| Category* | Citation of document, with indication, where appropriate, of the relevant passages | Relevant to claim No. |
|---|---|---|
| X | CN 107896332 A (DOLBY LABORATORIES LICENSING CORP.) 10 April 2018 (2018-04-10) description, paragraphs 0042-0187 | 1-22 |
| A | CN 110915221 A (SONY CORP.) 24 March 2020 (2020-03-24) entire document | 1-22 |
| A | CN 111491168 A (HUAWEI SOFTWARE TECHNOLOGY CO., LTD. et al.) 04 August 2020 (2020-08-04) entire document | 1-22 |
| A | CN 112040240 A (SZ DJI TECHNOLOGY CO., LTD.) 04 December 2020 (2020-12-04) entire document | 1-22 |
| A | WO 2023281264 A2 (BRITISH BROADCASTING CORP.) 12 January 2023 (2023-01-12) entire document | 1-22 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **17 October 2024** | **28 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 697 716 A1

**INTERNATIONAL SEARCH REPORT**
Information on patent family members

International application No.

**PCT/CN2024/111111**

| Patent document cited in search report | | | Publication date (day/month/year) | Patent family member(s) | | | Publication date (day/month/year) |
|---|---|---|---|---|---|---|---|
| CN | 107896332 | A | 10 April 2018 | JP | 2016208542 | A | 08 December 2016 |
| | | | | KR | 20160029134 | A | 14 March 2016 |
| | | | | HK | 1203013 | A1 | 09 October 2015 |
| | | | | KR | 20140120320 | A | 13 October 2014 |
| | | | | US | 2017164008 | A1 | 08 June 2017 |
| | | | | HK | 1251970 | A1 | 10 May 2019 |
| | | | | TW | 201642656 | A | 01 December 2016 |
| | | | | EP | 2801192 | A1 | 12 November 2014 |
| | | | | TW | 201347542 | A | 16 November 2013 |
| | | | | WO | 2013103522 | A1 | 11 July 2013 |
| | | | | US | 2014341305 | A1 | 20 November 2014 |
| | | | | JP | 2015503873 | A | 02 February 2015 |
| | | | | CN | 104041036 | A | 10 September 2014 |
| CN | 110915221 | A | 24 March 2020 | WO | 2019017362 | A1 | 24 January 2019 |
| | | | | US | 2020154143 | A1 | 14 May 2020 |
| | | | | JPWO | 2019017362 | A1 | 28 May 2020 |
| | | | | KR | 20200028335 | A | 16 March 2020 |
| | | | | MX | 2020000449 | A | 13 July 2020 |
| | | | | CA | 3069106 | A1 | 24 January 2019 |
| | | | | US | 2022086500 | A1 | 17 March 2022 |
| | | | | EP | 3657807 | A1 | 27 May 2020 |
| CN | 111491168 | A | 04 August 2020 | None | | | |
| CN | 112040240 | A | 04 December 2020 | None | | | |
| WO | 2023281264 | A2 | 12 January 2023 | GB | 2608990 | A | 25 January 2023 |

Form PCT/ISA/210 (patent family annex) (July 2022)

**EP 4 697 716 A1**

**Patent documents cited in the description**

- CN 202311037386

- CN 202411074857